# EUROPÄISCHE PATENTANMELDUNG

(11) **EP 0 899 010 A1**
(43) Veröffentlichungstag der Anmeldung: **03.03.1999**
(21) Anmeldenummer: 98810707.4
(22) Anmeldetag: 22.07.1998
(51) Int. Cl.: B01J 19/08, B01J 35/02, B01J 8/06

(54) **Verfahren zur Herstellung eines Katalysatoraufbaus und Katalysatoraufbau**

(30) Priorität: 18.08.1997 DE 19735785
(71) Anmelder: ABB RESEARCH LTD., 8050 Zürich (CH)
(72) Erfinder: Killer, Eric, 5430 Wettingen (CH)
(74) Vertreter: Lück, Gert, Dr.

(57) **Zusammenfassung**

Um beliebige Katalysatormaterialien (11) einsetzen zu können, ohne daß die zu beschleunigende Reaktion durch einen Katalysatorträger (10) aus einem schichtförmigen Glasfaservlies beeinflußt wird, bestreut man nur einen Teil der Oberfläche des Katalysatorträgers (10) mit Katalysatormaterial (11) und wickelt diesen so behandelten Katalysatorträger (10) um ein Dielektrikumsrohr (2) derart, daß mindestens 2 Wicklungen dieses Katalysatorträgers (10) übereinander zu liegen kommen und das Katalysatormaterial (11) dazwischen. Die Körner des Katalysatormaterials (11) haben einen Durchmesser von kleiner als 1 mm; sie sind homogen verteilt auf einen Teil des Katalysatorträgers (10) aufgestreut. Vor und nach dem Aufbringen der Körner des Katalysatormaterials (11) wird der Katalysatorträger (10) mit destilliertem Wasser befeuchtet.

## Beschreibung

### TECHNISCHES GEBIET

Bei der Erfindung wird ausgegangen von einem Verfahren zur Herstellung eines Katalysatoraufbaus und von einem Katalysatoraufbau nach dem Oberbegriff der Patentansprüche 1 und 7.

### STAND DER TECHNIK

Mit dem Oberbegriff der Patentansprüche 1 und 7 nimmt die Erfindung auf einen Stand der Technik Bezug, wie er aus der DE 4220865 Al bekannt ist. Dort sind ein Verfahren und eine Vorrichtung zur Hydrierung von Kohlendioxid durch stille elektrische Entladungen in einem Reaktionsraum mit einem Katalysatoraufbau beschrieben. Als Katalysatoraufbau ist ein gas- und dampfdurchlässiger Katalysatorträger aus Glas- Quarz- oder Mineralwolle, Silica Gel oder Granulat vorgesehen, das mit Katalysatormaterialien beschichtet ist und den Reaktionsraum teilweise locker ausfüllt. Der Katalysatorträger kann ggf. selbst katalytisch wirksam sein. Katalysatoren haben einen günstigen Einfluß auf die Reaktionstemperatur und Selektivität der Reaktion. Es ist nicht näher angegeben, wie das Katalysatormaterial im Katalysatorträger gehalten ist. Befestigt man den Katalysator mit einem Bindemittel an dem Katalysatorträger, so werden dessen katalytische Eigenschaften ungünstig beeinflußt.

### DARSTELLUNG DER ERFINDUNG

Die Erfindung, wie sie in den Patentansprüchen 1 und 7 definiert ist, löst die Aufgabe, ein Verfahren zur Herstellung eines Katalysatoraufbaus und einen Katalysatoraufbau der eingangs genannten Art derart weiterzuentwickeln, daß jedes beliebige Katalysatorpulver, ohne Beeinträchtigung durch den Katalysatorträger, einsetzbar wird.

Vorteilhafte Ausgestaltungen der Erfindung sind in den abhängigen Patentansprüchen definiert.

Ein Vorteil der Erfindung besteht darin, daß handelsübliches Glasfaservlies ohne Vorbehandlung als Katalysatorträger einsetzbar ist.

### KURZE BESCHREIBUNG DER ZEICHNUNGEN

Die Erfindung wird nachstehend anhand von Ausführungsbeispielen erläutert. Es zeigen:
- Fig. 1: einen Reaktor mit einem Katalysatoraufbau im Reaktionsraum und
- Fig. 2: ein zu umwickelndes Dielektrikumsrohr neben einem Glasfaservlies, das in seiner rechten Hälfte mit Katalysatorkörnern bestreut ist.

### WEGE ZUR AUSFÜHRUNG DER ERFINDUNG

In den Figuren sind gleiche Teile mit gleichen Bezugszeichen gekennzeichnet.

In einen Reaktionsraum (6) eines Katalysatorreaktors bzw. Entladunsgreaktors bzw. Reaktors (1) mit einem Dielektrikumsrohr (2) aus Quarz, einer darin angeordneten Innenelektrode (3) aus korrosionsbeständigem Metall oder aus einer Metallegierung oder aus einer elektrisch leitenden Schicht, einer geerdeten Außenelektrode (4) und einem in dem Reaktionsraum (6) zwischen Dielektrikumsrohr (2) und Außenelektrode (4) angeordneten Katalysatoraufbau (5) werden von links Einlaßgase (7) zugeführt. Als Einlaßgase (7) werden z. B. CO₂, H₂, CH₄, O₂ u. a. Treibhausgase verwendet, die im Reaktor (1) zu Reaktionsgasen bzw. Auslaßgasen (8), wie z. B. Methanol, CH₃OH, umgesetzt und in Pfeilrichtung nach rechts abgegeben werden. Die Innenelektrode (3) steht endseitig mit einer Wechselspannungsquelle (9) mit, einer Wechselspannung im Bereich von 5 kV - 50 kV, vorzugsweise von 20 kV, und einer Frequenz im Bereich von 50 Hz - 1 MHz, vorzugsweise von 30 kHz, in elektrischer Verbindung. Die Leistung der Wechselspannungsquelle (9) liegt im Bereich von 100 W - 1 kW.

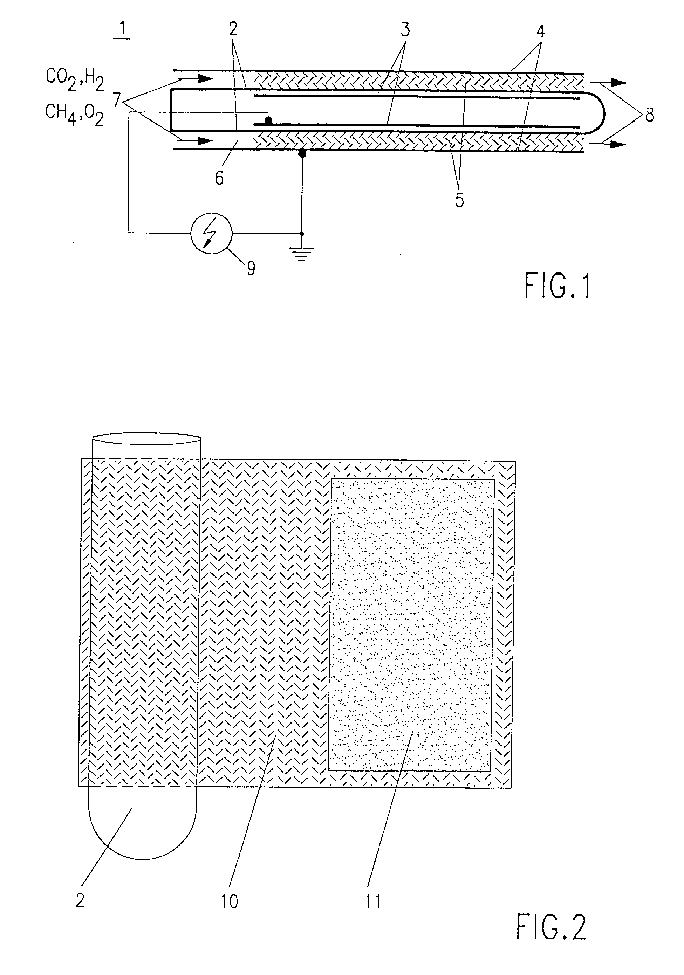

Der Katalysatoraufbau (5) weist ein chemisch inertes, gas- und dampfdurchlässiges Trägermaterial bzw. einen Katalysatorträger (10) aus Glasvlies bzw. Glasfaservlies auf, auf dessen rechter Oberflächenhälfte Katalysatormaterial bzw. Katalysatorpulver bzw. Katalysatorkörner (11) mit einem Durchmesser von kleiner als 1 mm gleichmäßig aufgestreut sind, vgl. Fig. 2. Dieser Katalysatorträger (10) wird anschließend, beginnend mit dem unbestreuten Teil, straff um das Quarz- bzw. Dielektrikumsrohr (2) gewickelt, so daß danach mindestens 2 Wicklungen übereinander liegen. Auf diese Weise entsteht ein Wickelpaket (5), bei dem sich Katalysatorträger (10) und Katalysatorkörner (11) abwechseln. Die Wicklung erfolgt so straff, daß die Katalysatorkörner (11) festgehalten und der Reaktionsspalt (6) im Reaktor (1) völlig ausgefüllt wird.

Das Einlaßgas (7) fließt nun entlang der Glasfasern des Gasfaservlieses (10) zu den Katalysatorkörnern (11), an denen die Reaktion erfolgt. Das Gasfaservlies (10) hat einen günstigen Einfluß auf die Zündspannung, was besonders bei höherem Druck, z. B. 10⁶ Pa, von Vorteil ist.

Im Betrieb verteilt sich der Katalysator (11) auch ins Innere der Vliesschicht (10). Auf diese Weise eingesetzter Katalysator (11) zeigt die gleichen Eigenschaften wie eine normale Schüttung.

### Beispiel:

Es wurden ein Glasfaservlies mit einer Flächendichte von 27 g/cm² in einer Abmessung von 30 cm 31 cm und 8 g Katalysatorkörner (11), im Handel erhältlich unter der Handelsbezeichnung Haldor Topsoe MK 101, mit einer Korngröße im Bereich von 0,25 mm - 0,5 mm verwendet.

Das Glasfaservlies (10) wurde auf einer flachen Unterlage mit destilliertem Wasser befeuchtet, damit sich die statische Aufladung verringert. Auf eine Hälfte der Vliesfläche wurde der Katalysator (11) homogen verteilt und mit destilliertem Wasser zur Fixierung besprüht. Das fertig präparierte Glasfaservlies (10) wurde, mit der unbeschichteten Hälfte beginnend, auf das Dielektrikumsrohr (2) aufgerollt, so daß sich die Katalysatorkörner (11) zwischen den 2 Glasfaservliesschichten (10) befanden. Die Enden des Katalysatoraufbaus (5) wurden nun mit destilliertem Wasser fixiert. Das fertig präparierte Dielektrikumsrohr (2) wurde danach in den Reaktionsraum (6) des Reaktors (1) eingeschoben und zur Entfernung des Wassers bei 120 °C ausgeheizt. Danach war der Reaktor (1) einsatzbereit.

Ein Gasgemisch, bestehend aus den Treibhausgasen Methan und Kohlensäure, wurde bei 2 · 10⁵ Pa mit einer Durchflußgeschwindigkeit von 1 l/min durch den Entladungsspalt (6) geleitet. Das Spaltvolumen, ohne Glasfaservlies (10) und Katalysatorkörner (11), betrug 50 ml. Mit einer elektrischen Leistung von 500 W wurden, bei einer Frequenz von 30 kHz, die eingesetzten Treibhausgase gespalten und aus den Spaltprodukten (8) neue Stoffe gebildet, u. a. Methanol.

Durch die Wahl des Katalysators (11) wurde die Methanolproduktion gezielt beeinflußt und gleichzeitig die optimale Reaktionstemperatur, gegenüber rein thermischem Betrieb ohne Entladung, um etwa 100 °C auf 100 °C erniedrigt. Bei dieser Temperatur erhöht sich die Methanolausbeute um einen Faktor 10 und die Selektivität der Reaktion um einen Faktor 10 - 20.

Es versteht sich, daß anstelle von Glasfaservlies (10) auch ein anderes chemisch inertes und gasdurchlässiges Material verwendet werden kann. Es können auch mehr als 2 Wicklungen aus Glasfaservlies (10) und Katalysatorkörnern (11) im Katalysatoraufbau (5) vorhanden sein. Der Katalysatorträger (10) muß nicht notwendig um ein Dielektrikumsrohr (2) gewickelt sein; er könnte auch in mindestens 2 ebenen Schichten angeordnet sein, mit Katalysatormaterial (11) zwischen den Schichten (nicht dargestellt). Vorteilhaft ist es, wenn die Körner des Katalysatormaterials (11) nicht direkt mit dem Dielektrikum (2) in Verbindung kommen.

### BEZEICHNUNGSLISTE

- 1: Reaktor, Katalysatorreaktor, Entladungsreaktor
- 2: Dielektrikumsrohr, Quarzrohr, Rohr
- 3: Innenelektrode
- 4: Außenelektrode, Metallrohr
- 5: Katalysatoraufbau
- 6: Reaktionsraum, Entladungsspalt, Reaktionsspalt
- 7: Einlaßgase, Treibhausgase
- 8: Auslaßgase, Reaktionsgase, Reaktionsprodukte
- 9: Wechselspannungsquelle
- 10: Katalysatorträger, Glasfaservlies
- 11: Katalysatormaterial, Katalysatorkörner, Katalysatorpulver

## Patentansprüche

1. Verfahren zur Herstellung eines Katalysatoraufbaus (5)
a) mit einem chemisch inerten, gas- und dampfdurchlässigen, faserhaltigen Katalysatorträger (10) und
b) einem Katalysatormaterial (11),
dadurch gekennzeichnet,
c) daß der Katalysatoraufbau (5) in mindestens zwei übereinanderliegenden Schichten des Katalysatorträgers (10) aufgebaut wird und
d) daß auf mindestens eine Oberfläche einer der mindestens zwei Schichten des Katalysatorträgers (10) Körner aus Katalysatormaterial (11) aufgestreut werden, bevor diese Schichten übereinandergelagert werden, derart,
e) daß das Katalysatormaterial (11) zwischen mindestens zwei Schichten des Katalysatorträgers (10) zu liegen kommt.

2. Verfahren nach Anspruch 1, dadurch gekennzeichnet,
a) daß nur auf einen Teil einer Oberfläche eines schichtartigen Katalysatorträgers (10) Körner aus Katalysatormaterial (11) aufgestreut werden,
b) daß anschließend dieser so bestreute Katalysatorträger (10) auf ein Rohr (2) aufgewickelt wird,
c) beginnend bei dem nicht bestreuten Teil des Katalysatorträgers (10), derart, daß mindestens 2 Wicklungen dieses Katalysatorträgers (10) übereinander zu liegen kommen und das Katalysatormaterial (11) dazwischen.

3. Verfahren nach Anspruch 1 oder 2, dadurch gekennzeichnet, daß Katalysatormaterial (11) mit einem Durchmesser von kleiner als 1 mm homogen verteilt auf einen Teil des Katalysatorträgers (10) aufgestreut wird.

4. Verfahren nach einem der vorhergehenden Ansprüche, dadurch gekennzeichnet, daß der Katalysatorträger (10) vor dem Aufstreuen des Katalysatormaterials (11) mit Wasser befeuchtet wird.

5. Verfahren nach einem der vorhergehenden Ansprüche, dadurch gekennzeichnet, daß der Katalysatorträger (10) nach dem Aufstreuen des Katalysatormaterials (11) mit Wasser befeuchtet wird.

6. Verfahren nach einem der vorhergehenden Ansprüche, dadurch gekennzeichnet, daß die Enden des Katalysatoraufbaus (5) mit Wasser fixiert werden.

7. Katalysatoraufbau (5)
a) mit einem chemisch inerten, gas- und dampfdurchlässigen, faserhaltigen Katalysatorträger (10) und
b) einem Katalysatormaterial (11),
dadurch gekennzeichnet,
c) daß der Katalysatorträger (10) schichtartig ausgebildet ist,
d) daß auf mindestes einer Oberfläche einer Schicht des schichtartigen Katalysatorträgers (10) Körner aus Katalysatormaterial (11) aufgestreut sind, derart,
f) daß mindestens 2 Schichten dieses Katalysatorträgers (10) übereinander zu liegen kommen und das Katalysatormaterial (11) dazwischen.

8. Katalysatoraufbau (5) nach Anspruch 7, dadurch gekennzeichnet,
a) daß nur auf einem Teil einer Oberfläche des schichtartigen Katalysatorträgers (10) Körner aus Katalysatormaterial (11) aufgestreut sind,
b) daß dieser so bestreute Katalysatorträger (10) als Wicklung ausgebildet ist,
c) daß der nicht bestreute Teil des Katalysatorträgers (10) eine Innenlage dieser Wicklung bildet und
d) der bestreute Teil eine darüberliegende Lage, derart, daß mindestens 2 Wicklungen dieses Katalysatorträgers (10) übereinander zu liegen kommen und das Katalysatormaterial (11) dazwischen.

9. Katalysatoraufbau (5) nach einem der Ansprüche 6 bis 8, dadurch gekennzeichnet, daß Katalysatormaterial (11) mit einem Durchmesser von kleiner als 1 mm homogen verteilt auf einen Teil des Katalysatorträgers (10) aufgestreut ist.
